Europäisches Patentamt

European Patent Office

Office européen des brevets

(11) Publication number: **0 389 692**
**A1**

## EUROPEAN PATENT APPLICATION

(21) Application number: **89200822.8**

(22) Date of filing: **31.03.89**

(51) Int. Cl.5: **F16B 12/10, F16B 7/04**

(43) Date of publication of application:
**03.10.90 Bulletin 90/40**

(84) Designated Contracting States:
**AT BE CH DE ES FR GB GR IT LI LU NL SE**

(71) Applicant: **MEUBELINDUSTRIE GELDERLAND B.V.**
**Stationsweg 7 Postbus 13**
**NL-4000 AA Culemborg(NL)**

(72) Inventor: **Brouwers, Stoffel**
**Provincialeweg 33**
**NL-4032 NZ Ommeren(NL)**

(74) Representative: **Kooy, Leendert Willem et al**
**OCTROOIBUREAU VRIESENDORP & GAADE**
**P.O. Box 266**
**NL-2501 AW The Hague(NL)**

(54) Coupling element.

(57) A coupling element (3) is described for connecting two objects (1, 2) with each other, which coupling element (3) is provided with at least one receiving member (10) and an other member (18), which members are connected with each other by a flexible connecting member (17).

According to the invention the coupling element (3) is on the one hand provided with an open receiving member (10), which is connectable with the one object (2) and on the other hand provided with a hook-shaped member (18), which may engage on the other object (1).

FIG. 3

The present invention relates to a coupling element for connecting two objects with each other, which coupling element is provided with at least one receiving member and with an other member, which members are connected with each other by a flexible connecting member.

From applicants' experience a coupling element of this type is known for furniture, in particular sofas, which comprises ring-shaped receiving members which are placed at a distance from each other and are connected with each other by an intermediate piece. The ring-shaped receiving members consist of closed rings, which have to be applied around the legs of the furniture or other objects. This means that the objects with the legs must be lifted from the floor, to be able to attach the ring-shaped receiving members around the legs and to slide them off the legs. This is a difficult and time-consuming job, which moreover often cannot be done by one person with heavy objects like sofas, cupboards and the like.

The invention has the object to remove this objection of the known coupling element.

This object is attained, in that according to the invention the coupling element on the one hand is provided with an open receiving member, which is connectable with the one object and on the other hand is provided with a hook-shaped member, which may engage on the other object.

Because of the fact that at one side of the coupling element an open receiving member is applied, this side of the coupling element can easily and rapidly be connected with a part of the one object, while the hook-shaped element can engage behind a part of the other object. Thereby the objects need not to be lifted, so that the coupling of the objects can easily be done by one person.

With a preferred embodiment of the coupling element according to the invention the receiving member fits at least partly exactly on a part of the one object, the hook-shaped member at the side directed towards the other object is provided with a rising plane and the hook-shaped member is connected with the receiving member by a resiliently flexible connecting member.

Due to the at least partly extact fit of the receiving member, on a part of the one object, the coupling element always takes a fixed position with respect to the parts to be connected of the objects and consequently the hook-shaped member can always be positioned at a fixed height above a floor, so that the objects, e.g. two sofas or two cupboards, can be simply coupled to each other by mounting the receiving member on a suitable part of the one object and by pushing the other object towards the coupling element, so that the part to be coupled of the other object pushes the hook-shaped member downwardly against spring force when running on the rising plane thereof and said hook-shaped member springs resiliently upwardly after passing of the part to be coupled and the hook-shaped member engages behind the part to be coupled of the other object.

In a special appropriate embodiment of the coupling element according to the invention the open receiving member is U-shaped and provided with resiliently flexible legs, the one leg of which at its free end is connected with an end of the connecting member and the distance between the legs of the U-shaped receiving member at the base of the U being greater than at the free ends of the legs, and in that the hook-shaped member has substantially the shape of a rectangular triangle which with one of its cathetuses is connected with the other end of the connecting member, in such a way, that said cathetus is perpendicular to the longitudinal direction of the connecting member and the largest part of said cathetus is at the same side of the connecting member as the U-shaped receiving member, and the rising plane substantially runs along the hypotenuse of the triangle.

With said embodiment of the receiving member one obtains a clamping connection of the receiving member with the part to be coupled of the one object and the said one cathetus of the triangled hook member extends outwardly over a small distance at the side of the connecting member opposite the U-shaped receiving member, so that one edge of the part of the other object always runs on the rising plane of the hook-shaped member and pushes the latter away against spring force, when at least corresponding parts of the two objects are coupled with each other.

The invention will be further elucidated on basis of the drawing with an example.

Figure 1 is a perspective vie of two sofas, which can be coupled with each other by one or more coupling elements according to the invention,

figure 2 is a perspective view of the coupled sofas,

figure 3 shows a cross-section and a perspective view of the parts to be coupled of the sofas according to the figures 1 and 2, and

figure 4 is a perspective view of the connection of the coupling element with a part of the one sofa.

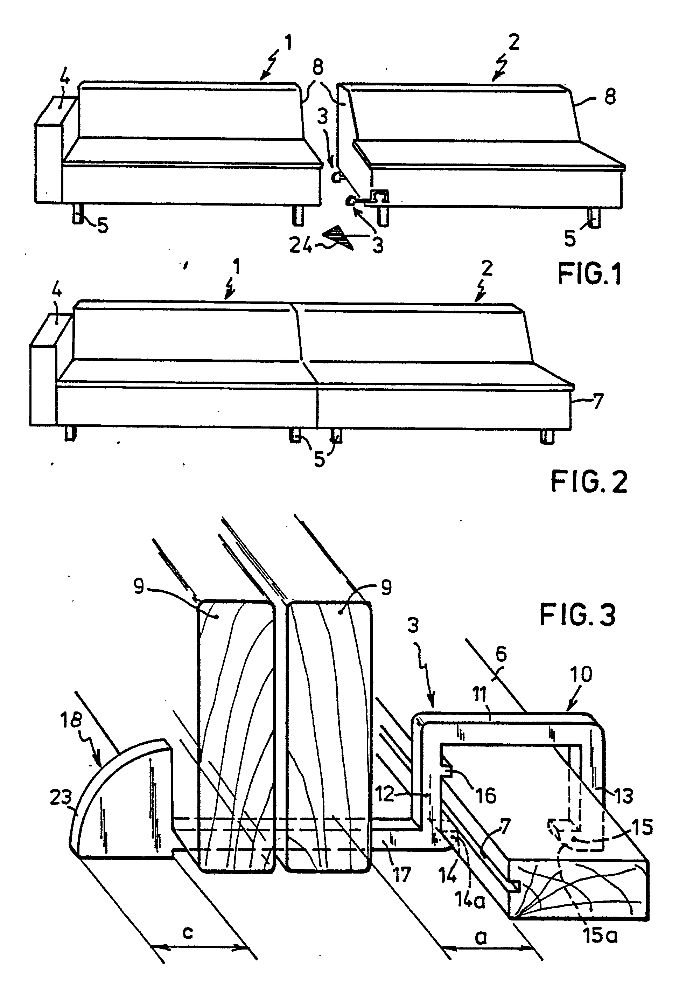

In the figure 1 and 2 two sofas 1 and 2 are drawn, which can be coupled with each other by one or more coupling elements 3 according to the invention and the arm-rests being omitted at the sides to be coupled. The sofas 1 and 2 stand on legs 5.

The legs 5, two at the front side and two at the back side of the sofas 1 and 2, are screwed (not drawn) in a so-called bridge rail 6 (figure 3), which forms a part of the frame of the sofas 1 and 2, which is provided with a groove 7 the function of which will be elucidated at yet and which is solidly connected with the remaining part of the frame. Said bridge rails 6 are positioned adjacent to the sides 8 of the sofas 1 and 2 above the legs 5. Parallel to and at the outside of the bridge rails 6 the frame of the sofas 1 and 2 is provided with a so-called seat side rail 9 (figure 3), on which the arm-rests 4 can be secured and which also forms a part of the frame of the sofas 1 and 2.

According to the invention a coupling element 3 is proposed, with which the two sofas 1 and 2 can be coupled with each other. The coupling element 3 is preferably manufactured of a relative rigid and hard synthetic material, but could, however, e.g. be manufactured of metal and is preferably made in one piece.

The coupling element 3 according to the invention is provided with an open U-shaped receiving member 10 having a base 11 and legs 12 and 13, which are resiliently flexible towards and away from each other. Moreover, the distance between the legs 12 and 13 at the base 11 of the U is greater than at the free ends of the legs.

Furthermore the legs 12 and 13 of the U-shaped receiving member 10 near their free ends, consequently at the ends opposite the base 11, are provided on the inside with an inwardly extending hook-shaped cam 14 and 15 respectively, which have a rounding off 14a and 15a respectively. Besides, at the inside of the leg 12 and the U-shaped receiving member 10 a rib 16 is applied, which is substantially perpendicular to the longitudinal direction of said leg 12. The function and the operation of the U-shaped receiving member 10 will be further elucidated hereafter.

The coupling element 3 according to the invention is further provided with a resiliently flexible connecting member 17, which at one end is connected with and is substantially perpendicular to the free end of the leg 12 of the U-shaped receiving member 10. At the other end of the connecting member 17 a hook-shaped member 18 is applied, which has substantially the shape of a rectangular triangle having cathesuses 19 and 20 and a hypotenuse 21. The cathesus 19 is substantially parallel to the longitudinal direction of the connecting member 17 and the cathesus 20, which is connected with the connecting member 17, is perpendicular to the longitudinal direction thereof, in such a way, that the largest part of said cathesus 20 is at the same side of the connecting member 17 as the U-shaped receiving member 10.

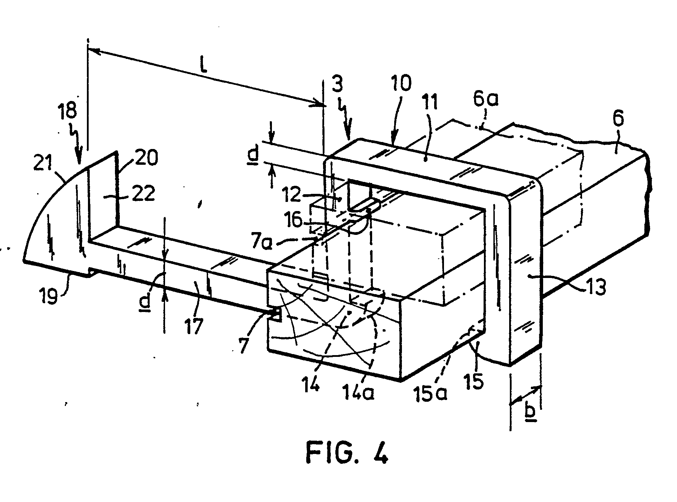

The thickness d of the material of the coupling element is e.g. ± 8 mm and the width b is e.g. ± 20 mm, vide figure 4. That means that the base 11 and the legs 12 and 13 of the U-shaped receiving member 10, and the connecting member 17 have the same thickness d and these parts, including the hook-shaped member 18, have the same width b.

Furthermore the upper plane of the cams 14 and 15, in the position of the coupling element 3 according to figure 3 or 4, lies higher than the upper plane of the resiliently flexible connecting member 17, because the lower planes of the seat side rails 9 may be provided with an unpholstery, which can be received in the thus formed space.

The hook-shaped member 18 is provided with a hook plane or an engaging plane 22 at the cathesus 20 directed towards the receiving member 10 and with a rising plane 23 along the hypotenuse 21 of the rectangular triangle at the side turned away from the receiving member 10. The rising plane 23 is drawn convexly curved in the figures 3 and 4, but it could e.g. also run along a straight line, or even somewhat concavely. Therewith it is important that the height of the hook-shaped member 18 gradually increases from the left, free end.

The function and the operation of the coupling element 3 according to the invention will now be further elucidated.

When using the coupling element 3 according to the invention the coupling element 3 is mounted in the position according to figure 3 with the U-shaped receiving member 10 on the bridge rail 6 of e.g. the sofa 2, by e.g. having the cam 14 engage under the rail 6 and then turning the coupling element 3 in clock-wise direction by pushing on the corner between base 11 and leg 12. Due to the rounding off 15a at the cam 15 at the leg 13, the cam 15 slides relatively easily over the right top edge of the bridge rail 6 (figure 3). One can also have the cam 15 engage under the bridge rail 6 and mount the coupling element 3 turning in clock-wise direction on the bridge rail 6. Herewith the rounding off 14a of the cam 14 provides an easy mounting. Herewith the coupling element 3 comes in the position according to figure 3, the cam 15 at the other side of the receiving member 10 engaging under the bridge rail 6, the rib 16 pushing on the top side of the bridge rail 6 and the connecting member 17 at the lower side resting against the right seat side rail 9, consequently that of the sofa 2. Therewith the legs 12 and 13 of the U-shaped receiving member 10 clamp against the sides of the bridge rail 6, because the distance between the legs 12 and 13 is somewhat smaller than the width of the bridge rail 6 and the legs being resiliently flexible. Further, the distance between the lower side of the rib 16 and the top side of the cam 14 is preferably equal to the thickness of the bridge rail 6, but may be somewhat smaller, so that a clamping action occurs.

Then the right sofa 2 is moved into the direction of the arrow 24 in figure 1 towards the left sofa 1, the rising plane 23 of the hook-shaped member 18 moving against the right lower edge (in figure 3) of the left seat side rail 9 (of the left sofa 1), so that the hook-shaped member 18 is pushed downwardly against the spring force of the connecting member 17. The sofa 2 is moved so far into the direction of the arrow 24 towards the sofa 1, until the hook-shaped member 18 has finally completely passed the left seat side rail 9 and is pushed resiliently upwardly by the biassed connecting member 17, the hook or engaging plane 22 lying against the left side of the left seat side rail 9 (in figure 3).

The length l of the connecting member 17 is such, that in the coupled position of the sofas 1 an 2, vide figure 2, the upholstery of the sofas 1 and 2 at the coupled sides 8 is somewhat pushed in or flattened, in such a way, that in longitudinal direction of the sofas 1 and 2 there is no play anymore between said sofas 1 and 2 and then these are pressed against each other with a certain force. This can easily be done, because the sofas, such as the sofas 1 and 2, at said sides 8 are upholstered with foam rubber or foam plastic with an upholstery of leather or fabric thereon.

In figure 3 the size c is preferably smaller than the size a, because at the left of the left seat side rail 9 there will be also a bridge rail, which is equal to the bridge rail 6, so that the hook-shaped member 18 can move upwardly between said bridge rail of the left sofa 1 and the left seat side rail 9.

In an other embodiment of the sofas 1 and 2, which is partly drawn in figure 4, and in which the bridge rail 6a, which is drawn in dots and dash lines, lies higher than the bridge rail 6 drawn in full lines, the seat side rails 9 (not drawn in figure 4) lie consequently lower with respect to the bridge rail 6a, so that the coupling element 3 has to be clamped in a lower position on the bridge rail 6a. For that purpose the coupling element 3 is mounted such on the bridge rail 6a, that the rib 16 engages in the groove 7a. Herewith also the rounding off 15a of the cam 15 provides an easy mounting again. In the mounted position of the coupling element 3 the legs 12 and 13 clamp resiliently on the side planes of the bridge rail 6a.

Therewith the distance between the lower side of the base 11 of the U-shaped receiving member 10 and the top of rib 16 is substantially equal to the thickness of the material of the bridge rail 6a between the upper wall of the groove 7a and the upper plane of the bridge rail 6a.

The engagement of the hook-shaped member 18 behind the seat side rail of the other sofa takes place at the same way as with the embodiment according to figure 3. Here the sofas are also clamped against each other in longitudinal direction. It stands to reason that also with these embodiments of the sofas 1 and 2, two or more coupling elements 3 may be mounted in the above described way on the bridge rail 6a.

With the embodiment of the sofas 1 and 2, where the brigde rail 6a lies higher than the bridge rail 6 (drawn in dot and dash lines in figure 4), the sofas obtain a smaller height of the seat, if the legs 5 are of equal length.

By applying one or more, preferably two, coupling elements 3 between the sofas 1 and 2, these can be solidly and rapidly coupled with each other without lifting the sofas. The sofas 1 and 2 can also be released easily again from each other by manually pushing the hook-shaped member 18 downwardly and then moving the one sofa away from the other. The coupling elements 3 can be dismounted from the bridge rails 6 and 6a respectively transversely to the direction in which they are mounted.

Although the coupling element 3 according to the invention described above is mainly described on the basis of its application on sofas, it stands to reason that also cupboards, other furniture and objects can be coupled with each other with the coupling element 3 according to the invention.14

## Claims

1. A coupling element (3) for connecting two objects (1, 2) with each other, which coupling element (3) is provided with at least one receiving member (10), and with an other member (18), which members are connected with each other by a flexible connecting member (17), **characterized in that** said coupling element (3) on the one hand is provided with an open receiving member (10), which is connectable with the one object (2) and on the other hand is provided with a hook-shaped member (18), which may engage on the other object (1).

2. A coupling element according to claim 1, **characterized in that** the receiving member (10) fits at least partly exactly on a part (6, 6a) of the one object (2), that the hook-shaped member (18) at the side directed towards the other object (1) is provided with a rising plane (23) and that the hook-shaped member (18) is connected with the receiving member (10) by a resiliently flexible connecting member (17).

3. A coupling element according to claim 1 or 2, **characterized in that** the open receiving member (10) is U-shaped and is provided with resiliently flexible legs (12, 13), the one leg (12) of which at its free end is connected with an end of the connecting member (17) and the distance between the legs (12, 13) of the U-shaped receiving member (10) at the base (11) of the U being greater than at the free ends of the legs, and that the hook-shaped member (18) has substantially the shape of a rectangular triangle which with one (20) of its cathetuses is connected with the other end of the connecting member (17), in such a way, that said cathetus (20) is perpendicular to the longitudinal direction of the connecting member (17) and the largest part of said cathetus is at the same side of the connecting member (17) as the U-shaped receiving member (10), and the rising plane (23) substantially runs along the hypotenuse (21) of the triangle.

4. A coupling element according to claim 3, **characterized in that** the legs (12, 13) of the U-shaped receiving member (10) near their free ends on the inside are provided with an inwardly extending hook-shaped cam (14, 15) and that at the inside of the leg (12) of the U-shaped receiving member (10) at the side of the connecting member (17), a rib (16) is applied which is substantially perpendicular to the longitudinal direction of said leg (12).

5. A coupling element, according to claim 4, **characterized in that** the hook-shaped cams (14, 15) are provided with a rounding off (14a, 15a) at the outside of their free end.

6. A coupling element according to claim 2, 3, 4 or 5, **characterized in that** the rising plane (23) of the hook-shaped member (18) is convexedly curved.

7. A coupling element according to claim 2, 3, 4 or 5, **characterized in that** the rising plane (23) of the hook-shaped member (18) runs along a straight line.

8. A coupling element according to one or more of the preceding claims, **characterized in that** the coupling element (3) is manufactured of one piece of synthetic material.

FIG.1

FIG.2

FIG.3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-3634543 (R. KRUG) <br> * the whole document * | 1 | F16B12/10 <br> F16B7/04 |
| A | | 2-4, 8 | |
| A | US-A-3965540 (DAVID M. MOORE) <br> * figures 1, 3, 4 * | 1 | |
| A | LU-A-51814 (HOLZBAU-UND FINANZ ETS.) | | |

TECHNICAL FIELDS
SEARCHED (Int. Cl.5 )

F16B
A47C

The present search report has been drawn up for all claims

| Place of search | Date of completion of the search | Examiner |
|---|---|---|
| BERLIN | 05 DECEMBER 1989 | SCHAEFFLER C.A.A. |

EPO FORM 1503 03.82 (P0403)